# Europäisches Patentamt

(19) **European Patent Office**

**Office européen des brevets**

(11) Veröffentlichungsnummer: **0 193 002**

**B1**

(12) # EUROPÄISCHE PATENTSCHRIFT

(45) Veröffentlichungstag der Patentschrift:
15.11.89

(51) Int. Cl.⁴: **H 05 B 7/14**

(21) Anmeldenummer: **86101409.0**

(22) Anmeldetag: **04.02.86**

(54) Elektrodenverbindung.

(30) Priorität: **27.02.85 DE 3506908**

(43) Veröffentlichungstag der Anmeldung:
**03.09.86 Patentblatt 86/36**

(45) Bekanntmachung des Hinweises auf die Patenterteilung:
**15.11.89 Patentblatt 89/46**

(84) Benannte Vertragsstaaten:
**BE CH DE FR GB IT LI SE**

(56) Entgegenhaltungen:
**EP-A-0 027 012**
**AT-B-259 888**
**DE-A-3 131 588**
**DE-B-2 234 411**
**DE-B-2 657 952**
**US-A-3 646 240**
**US-A-4 161 619**

(73) Patentinhaber: **SIGRI GmbH, Werner- von- Siemens- Strasse 18, D-8901 Meitingen (DE)**

(72) Erfinder: **Kraus, Günter, Dr. rer.nat., Hauptstrasse 9, D-8859 Ehekirchen (DE)**

LIBER, STOCKHOLM 1989

## Beschreibung

Die Erfindung betrifft eine Verbindung zwischen den Abschnitten von Kohlenstoff- oder Graphitelektroden, in deren Stirnflächen zur Aufnahme von doppelkonischen Schraubnippeln gewindetragende, kegelstumpfförmige Schachteln und von der Schachtelbasis ausgehende rotationssymmetrische Ausnehmungen eingelassen sind.

In Lichtbogenöfen, vor allem zur Herstellung von Elektrostahl, verwendete Graphit- und Kohlenstoffelektroden - im folgenden unter dem Begriff "Graphitelektrode" zusammengefaßt - bestehen aus mindestens zwei, üblicherweise aus drei oder mehr mechanisch und elektrisch miteinander verbundenen zylindrischen Abschnitten. Beim Betrieb des Ofens wird die Elektrode allmählich verbraucht und als Ersatz der vorzugsweise im unteren Teil des Elektrodenstrangs entstandenen Verluste, z.B. durch Verdampfen des Kohlenstoffs im Lichtbogen, Erosion und Oxidation, wird periodisch am oberen Ende des Elektrodenstrangs ein neuer Graphitabschnitt an den Strang angestückelt. Die einzelnen Abschnitte des Elektrodenstrangs sind miteinander verschraubt, besonders mit Hilfe doppelkonischer Schraubnippel, die in gewindetragende kegelstumpfförmige Ausnehmungen - im folgenden Schachtel genannt - eingeschraubt sind, die in die Stirnflächen der Elektrodenabschnitte eingelassen sind.

Der Elektrodenstrang ist beim Betrieb des Lichtbogenofens größeren Belastungen ausgesetzt, z. B. durch radiale Temperaturgradienten, Biegespannungen durch Schrotteinstürze und Zugspannungen durch das Eigengewicht des Elektrodenstrangs. Da Nippel und Elektrodenabschnitt in der Regel aus zwei verschiedenen Graphitsorten mit unterschiedlichen mechanischen, thermischen und elektrischen Eigenschaften bestehen, sind die thermisch induzierten Spannungen im Verbindungsbereich besonders groß und es ist unter diesen Bedingungen nicht möglich, Brüche der Verbindung vollständig auszuschalten, die Graphitverluste und vor allem Störungen des Ofenbetriebs bedingen. Zur Begrenzung der thermisch induzierten Spannungen ist die Verwendung von Nippeln vorgeschlagen worden, deren thermischer Ausdehnungskoeffizient in radialer Richtung kleiner ist als der in gleicher Richtung gemessene Ausdehnungskoeffizient des anliegenden Elektrodenabschnitts (DE-PS 1 054 193). Dabei muß man aufgrund der Anisotropie der Graphitkörper in Kauf nehmen, daß die axiale Zugfestigkeit des Nippels verringert wird und vor allem die Produktion Joule'scher Wärme im Nippel wächst. Die Nachteile derartiger Materialänderungen wiegen daher die Vorteile in der Regel auf, so daß zur Entlastung der Nippelverbindungen Änderungen der Geometrie von Nippel und Schachtel bevorzugt werden. Die größten Spannungen liegen im Bereich des Nippeläquators und vor allem im Übergangsbereich zwischen Schachtelboden und den ersten mit dem Nippelgewinde im Eingriff stehenden Gewindegängen der Schachtel. In diesen Bereichen sind die akkumulierten Spannungen häufig größer als die Bruchfestigkeit des Graphits, es kommt zur Bildung von Rissen und in Grenzfall auch zum Bruch von Nippel, Schachtel oder beider Teile. Es sind verschiedene Lösungen vorgeschlagen worden, die den Spannungsaufbau begrenzen sollen, besonders im Übergangsbereich Schachtelboden-Schraubgewinde. z. B. ist durch die DE-PS 9 555 688 eine Verbindung bekannt, bei welcher die Tiefe des Schachtelgewindes zum Schachtelgrund hin und die Tiefe des Nippelgewindes zum Nippeläquator hin sich stetig verringert, wodurch Spannungsspitzen in den jeweils ersten Gewindegängen verringert werden. Nach einem anderen Vorschlag ist es bekannt, die nicht im Eingriff mit dem Nippelgewinde stehenden Gewindegänge der Schachtel durch Hinterschneiden zu entfernen und damit den Kerbwinkel zu vergrößern (DE-AS 2 234 411). Der Gewindequerschnitt ist im Bereich der Hinterschneidung zweckmäßig verkürzt und die zur Schachtelöffnung weisenden Gewindeflanken durch die Verkürzung unter einem Winkel geschnitten, der höchstens ein rechter Winkel ist (DE-OS 2 657 952). Zweck dieser Maßnahmen ist es im wesentlichen, die Belastung der Schachtel in diesem kritischen Bereich zu verringern. Nach der DE-OS 3 131 588 soll eine Entlastung der Gewindegänge von Druckspannungen im Übergangsbereich des Schachtelbodens und eine Verminderung der in diesem Bereich sehr großen Stromdichte schließlich dadurch erreicht werden, daß das Widerstandsmoment des Nippels durch von seiner Stirnfläche ausgehende rotationssymmetrische Ausnehmungen derart verringert wird, daß der Nippel bei radialer Biegebelastung elastisch nachgibt. Diese Ausnehmung erstreckt sich wenigstens über die Höhe der ersten drei im Eingriff stehenden Gewindegänge und ihre Kontur ist derart gestaltet, daß an jedem Punkt die Tangente mit der Nippelachse einen Winkel größer als null Grad einschließt. Bei einer anderen Gruppe von Lösungsvorschlägen sollen Schachtel und Nippel durch Schlitze, Nuten oder Bohrungen insbesondere von Zugspannungen entlastet werden. Schlitze erstrecken sich im wesentlichen parallel zur Elektrodenachse quer durch Schachtelwand oder Nippel (US-PS 2 527 294) oder in die Schachtelwand sind achsparallele Bohrungen eingelassen (AT-PS 259 888).

Der Abbau örtlicher Spannungsspitzen in der Verbindung reicht im allgemeinen nicht aus, den Bruch der Verbindung vollständig auszuschließen. Andere bekanntgewordene Maßnahmen haben deshalb zum Ziel, anliegende Spannungen in die Teile des Elektrodenstrangs einzuleiten, die unter Druckspannungen stehen. Nach der US-PS 3 646 240 ist eine Elektrodenverbindung bekannt, deren Schachtelböden gewölbeartig ausgenommen sind. Im Grenzfall ist die gewölbeartige Bohrung eine Halbkugel mit der Schachtelfläche als Querschnitt, bevorzugt werden größere Durchmesser. Die auf die Verbindung wirkenden Kräfte sollen bei dieser Ausführungsform ohne den Aufbau destruktiver Spannungskonzentrationen in die Elektrodenabschnitte eingeleitet werden. In einer anderen Ausführungsform (US-PS 4 161 619) ist eine flachere Aussparung unterhalb des Schachtelbodens vorgesehen, wobei die letzte Flanke des Schachtelgewindes mit gleichmäßiger Krümmung in die ebene Begrenzungsfläche der Aussparung übergeht. Der Radius der Kurvatur soll etwa 12 bis 18 mm betragen.

Der Erfindung liegt nun die Aufgabe zugrunde, die Verbindung zwischen den Elektrodenabschnitten in einem größeren Maße als durch die bekanntgewordenen Lösungsvorschläge von thermisch-mechanischen und mechanischen Spannungen zu entlasten, die Spannungseinleitung in dem Druckspannungsbereich der Elektrodenabschnitte zu verbessern und den Aufbau von Spannungsspitzen im Schachtelgrund zu verhindern, so daß beim Betrieb der Elektrode im Bereich der Verbindung wenigstens keine zum Bruch des Elektrodenstrangs führende Risse gebildet werden.

Die Aufgabe wird bei einer Verbindung der eingangs genannten Art mit rotationssymmetrischen von der Schachtelbasis ausgehenden Ausnehmungen dadurch gelöst, daß

a)  die Hauptschnitte der rotationssymmetrischen Ausnehmungen durch Kurven zweiter oder höherer Ordnung begrenzt sind,

b)  der Übergang zwischen der Einhüllenden des Schachtelgewindes und der Begrenzungskurve eine stetig differenzierbare Kurve ist, und

c)  die Begrenzungskurve mit der am Fußpunkt der Einhüllenden errichteten Normalen und der Symmetrieachse des Hauptschnitts rechte Winkel bildet.

Hauptschnitte der ausgehend von der Basis oder dem Boden der Schachtel in die Elektrodenabschnitte eingelassenen Ausnehmungen enthalten als Symmetrieachse die Rotationsachse des Elektrodenstrangs. Die Ausnehmung wird gebildet, durch Drehung des Hauptschnitts um diese Achse. Begrenzt wird jeder Hauptschnitt durch eine Kurve wenigstens zweiter Ordnung, die stetig differenzierbar in die Einhüllende des Schachtelgewindes übergeht. Allgemein ist die Einhüllende ein Kegelmantel, deren Mantellinien den Kegelwinkel $\alpha$ einschließen. Die stetige Differenzierbarkeit bedingt, daß die Begrenzungskurve mit der am Fußpunkt der Einhüllenden errichteten Normalen und der Symmetrieachse des Hauptschnitts rechte Winkel bildet.

In einer bevorzugten Ausführungsform wird der Übergang zwischen der Einhüllenden des Schachtelgewindes und der Begrenzungskurve durch Kreisbögen gebildet, deren Mittelpunkte auf der am Fußpunkt der Einhüllenden errichteten Normalen liegen. Die Bogenlänge beträgt zweckmäßig $r\,(\pi/2 - \widehat{\alpha/2})$. Allgemein sind die Begrenzungskurven der Hauptabschnitte von der Form

$$Y = a_1\,x^n + a_2\,x^{n-1} \ldots a_{n-1}x + a_n \text{ mit } n \geqslant 2.$$

Bevorzugt werden Kurven, deren Basis abgeflacht ist und deren Rotationsflächen uhrglasförmig ausgebildet sind. Bei einer anderen vorteilhaften Ausführungsform werden die Hauptabschnitte durch Kurven dritter Ordnung begrenzt, deren Minima auf der Symmetrieachse des Schnitts liegen. Diese Ausnehmungen weisen zentrale Wölbungen auf, durch welche die Hauptspannung weiter zur Rotationsachse der Elektrode verlagert wird. Die Ausbildung des Schachtelgewindes ist von den bekannten Ausführungsformen nicht verschieden oder in einer bevorzugten Ausbildungsform ist der letzte Gewindegang hinterschnitten, so daß ein zusätzlicher Abbau der Spannungen im Übergangsbereich vom Gewinde zur Ausnehmung hin erreicht wird.

Der Vorteil der anmeldungsgemäßen Verbindung zwischen den Abschnitten von Graphitelektroden besteht im wesentlichen darin, daß nicht nur lokale Spannungserhöhungen in der Verbindung abgebaut werden, sondern die mechanischene Belastung insgesamt durch die Überlagerung radialer, durch die thermische Dehnung des Nippels bedingte Zugspannungen und radialer Druckspannungen, die von der Dehnung der Elektrodenabschnitte herrühren, vermindert wird. Die resultierende Ringspannung ist um etwa 20 bis 40 % kleiner als bei den vorbekannten Verbindungen.

Die Erfindung wird nachfolgend anhand von Zeichnungen beispielhaft erläutert. Es zeigen:

Fig. 1   eine Schnittansicht einer herkömmlichen Verbindung,

Fig. 2   eine schematische Schnittansicht mehrerer Ausnehmungen,

Fig. 3   eine schematische Schnittansicht von zwei Ausnehmungen mit gewölbtem Zentralabschnitt.

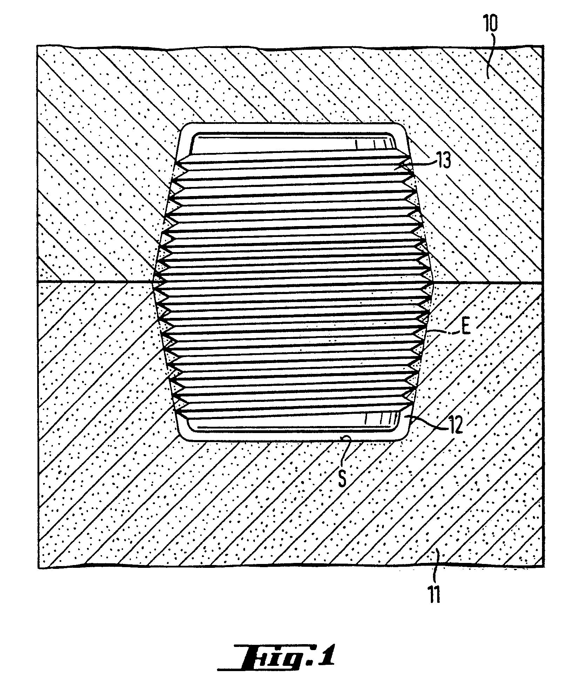

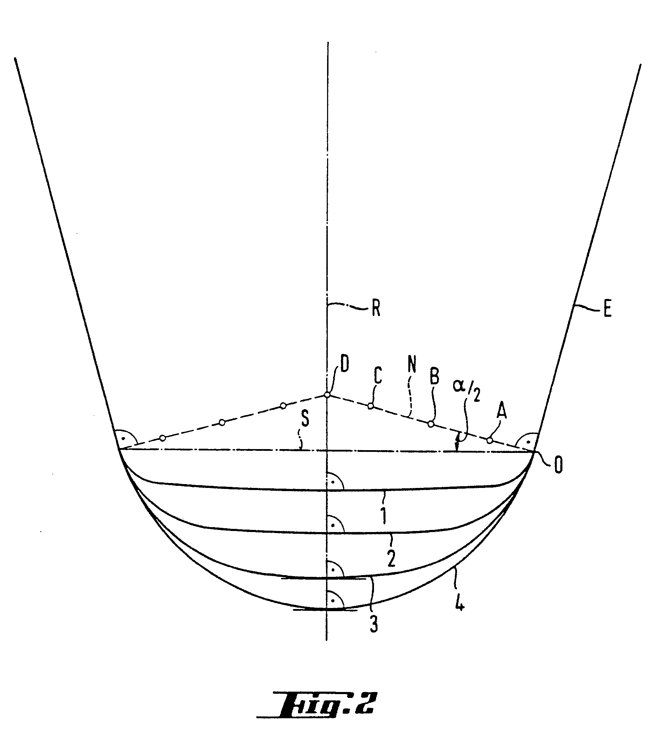

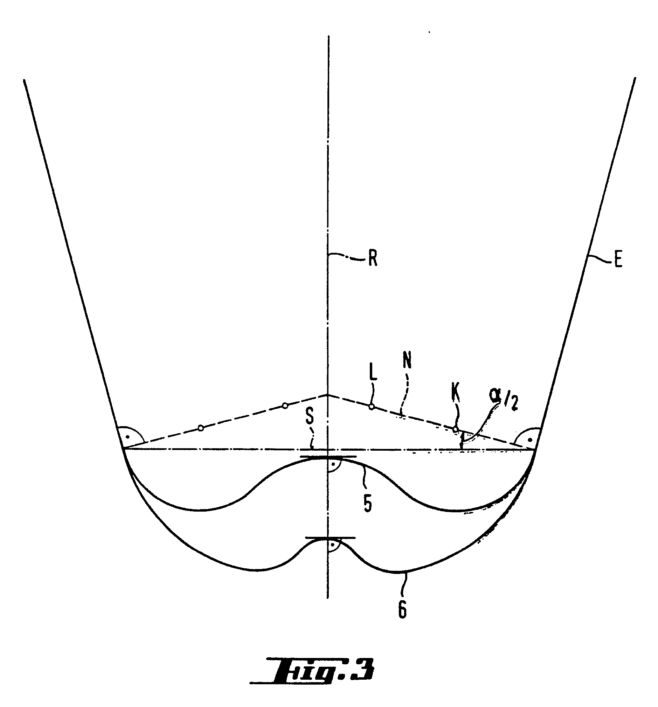

In der in Fig. 1 dargestellten herkömmlichen Nippelverbindung sind 10 und 11 zwei Abschnitte einer Graphitelektrode, in deren Stirnflächen gewindetragende, kegelstumpfförmige Schachteln 12 eingelassen sind. Beide Abschnitte sind mit dem doppelkonischen Gewindenippel 13 verschraubt. E ist der das Schachtelgewinde einhüllende Kegelmantel oder kurz die Einhüllende, S ist die Basisfläche oder der Boden der Schachtel. In der Fig. 2 sind vier von der Basisfläche S ausgehende, in die Elektrodenabschnitte eingelassene Ausnehmungen dargestellt, deren Begrenzungskurven 1, 2, 3 und 4 im Hauptschnitt Kurven zweiter oder höherer Ordnung sind. Der Übergang von der Einhüllenden E zu den Kurven hin, wird durch Kreisbögen mit den Mittelpunkten A, B, C und D gebildet, die auf der Normalen N mit dem Fußpunkt O liegen. Der Winkel zwischen den Normalen N und der Schachtelbasis S ist der halbe Kegelwinkel α/2 des Schachtelkegels. In den beispielhaft dargestellten Begrenzungskurven 1, 2, 3 gehen die Kreisbögen in ein zentrales Kurvenstück über, das im wesentlichen parallel zur ursprünglichen Schachtelbasis S ist. Die Form der Ausnehmung ist entsprechend uhrglasförmig. Alle Kurven bilden mit der Normalen N im Fußpunkt O und mit der Symmetrieachse oder Rotationsachse R des Nippelstrangs rechte Winkel. In Fig. 3 sind Hauptschnitte dargestellt, die von den Kurven dritter Ordnung 5 und 6 begrenzt sind. Die dazugehörigen Mittelpunkte der Übergangskreisbögen sind K und L. Die Minima der Kurven liegen auf der Symmetrieachse R und die durch Rotation gebildete Begrenzungsfläche der Ausnehmungen enthält entsprechend eine zentrale Wölbung.

**Patentansprüche**

1. Verbindung zwischen den Abschnitten (10, 11) von Kohlenstoff- oder Graphitelektroden, in deren Stirnflächen zur Aufnahme von doppelkonischen Schraubnippeln (13) gewindetragende, kegelstumpfförmige Schachteln (12) und von der Schachtelbasis ausgehende rotationssymmetrische Ausnehmungen eingelassen sind,
dadurch gekennzeichnet, daß
a) die Hauptschnitte der rotationssymmetrischen Ausnehmungen durch Kurven zweiter oder höherer Ordnung (1, 2, 3, 4) begrenzt sind,
b) der Übergang zwischen der Einhüllenden (E) des Schachtelgewindes und der Begrenzungskurve (1, 2, 3, 4) eine stetig differenzierbare Kurve ist, und
c) die Begrenzungskurve (1, 2, 3, 4) mit der am Fußpunkt (O) der Einhüllenden (E) errichteten Normalen (N) und der Symmetrieachse (R) des Hauptschnitts rechte Winkel bildet.
2. Verbindung nach Patentanspruch 1,
dadurch gekennzeichnet, daß
a) der Übergang zwischen der Einhüllenden (E) des Schachtelgewindes und der Begrenzungskurve (1, 2, 3, 4) durch Kreisbögen gebildet ist, und
b) der Mittelpunkt (A, B, C, D) jedes Kreisbogens auf der am Fußpunkt (O) der Einhüllenden (E) errichteten Normalen (N) liegt.
3. Verbindung nach den Patentansprüchen 1 und 2,
dadurch gekennzeichnet,
daß die Länge des Kreisbogens die mit dem Radius des Bogens multiplizierte Differenz eines rechten Winkels und des halben Kegelwinkels α ist.
4. Verbindung nach den Patentansprüchen 1 bis 3,
dadurch gekennzeichnet,
daß die Hauptschnitte durch eine uhrglasfömige Kurve begrenzt sind.
5. Verbindung nach den Patentansprüchen 1 bis 3,
dadurch gekennzeichnet,

daß die Hauptschnitte durch eine Kurve dritter Ordnung begrenzt sind.

**Patentansprüche**

1. Connection between the sections (10, 10) of carbon or graphite electrodes in whose end faces there are set for receipt of double-conical threaded nipples (13) thread carrying frustoconically shaped sockets (12) and rotationally symmetrical recesses emanating from the bottom of the sockets, characterized in that
(a) the principle sections of the rotationally symmetrical recesses are defined by curves of second or higher order (1, 2, 3, 4),
(b) the transition between the envelope (E) of the socket thread and the defining curve (1, 2, 3, 4) is a continuously differentiable curve, and
(c) the defining curve (1, 2, 3, 4) forms right angles with the normal (N) erected at the base (O) of the envelope (E) and with the axis of symmetry (R) of the principle section.
2. Connection according to claim 1, characterized in that
(a) the transition between the envelope (E) of the socket thread and the defining curve (1, 2, 3, 4) is formed by circular arcs, and
(b) the centre (A, B, C, D) of each circular arc lies on the normal (N) erected at the foot (O) of the envelope (E).
3. Connection according to claims 1 and 2, characterised in that the length of the circular arc is the difference of the right angle and the half-cone angle a multiplied by the radius of the arc.
4. Connection according to claims 1 to 3, characterized in that the principle sections are defined by a curve of watch-glass shape.
5. Connection according to claims 1 to 3, characterised in that the principle sections are defined by a third order curve.

**Revendications**

1) Raccord entre les parties (10, 11) d'électrodes de carbone ou de graphite, dans les faces frontales desquelles sont ménagées des cavités (12) en tronc de cône portant des filetages pour recevoir des raccords à vis (13) en double cône et des évidements à symétrie de rotation partant de la base de la cavité, caractérisé en ce que,
a) les sections principales des évidements à symétrie de rotation sont limitées par des courbes du deuxième degré ou d'ordre supérieur (1, 2, 3, 4),
b) le passage entre l'enveloppe (E) du filetage de cavité et la courbe de limitation (1, 2, 3, 4) est toujours une courbe continue dérivable, et
c) la courbe de limitation (1, 2, 3, 4,) forme un angle droit avec la normale (N) partant du pied (O) de l'enveloppe (E) et avec l'axe de symétrie (R) de la section principale.

2) Raccord selon la revendication 1 caractérisé en ce que,

a) le passage entre l'enveloppe (E) du filetage de cavité et la courbe de limitation (1, 2, 3, 4) est formé par des arcs de cercle, et

b) le centre (A, B, C, D) de chaque arc de cercle est placé sur la normale (N) partant du pied (O) de l'enveloppe (E).

3) Raccord selon les revendications 1 et 2, caractérisé en ce que, la longueur de l'arc de cercle est la différence entre un angle droit et la moitié de l'angle au sommet du cône α, multipliée par le rayon.

4) Raccord selon les revendications 1 à 3, caractérisé en ce que, la section principale est limitée par une courbe en forme de verre de montre.

5) Raccord selon les revendications 1 à 3, caractérisé en ce que, les sections principales sont limitées par une courbe du troisième degré.

*Fig.1*

**Fig.2**

**Fig. 3**